# EUROPÄISCHE PATENTANMELDUNG

(11) **EP 3 859 130 A1**
(43) Veröffentlichungstag der Anmeldung: **04.08.2021**
(21) Anmeldenummer: 20212663.7
(22) Anmeldetag: 09.12.2020
(51) Int. Cl.: F01N 3/28, F01N 3/08, F01N 3/20, F01N 1/16, F01N 13/00

(54) **VORRICHTUNG ZUR ABGASNACHBEHANDLUNG**

(30) Priorität: 28.01.2020 DE 102020201008
(71) Anmelder: Vitesco Technologies GmbH, 30165 Hannover (DE)
(72) Erfinder: Ceelen, Kim, 65824 Schwalbach a. Ts. (DE); Hirth, Peter, 65824 Schwalbach a. Ts. (DE); Schepers, Sven, 65824 Schwalbach a. Ts. (DE); Brück, Rolf, 65824 Schwalbach a. Ts. (DE)

(57) **Zusammenfassung**

Die Erfindung betrifft eine Vorrichtung zur Abgasnachbehandlung einer Feuerungsanlage, insbesondere eines Kaminofens, wobei die Vorrichtung in einem abgasführenden Abschnitt (8) der Feuerungsanlage angeordnet ist und einen Katalysator (1, 12) zur katalytischen Nachbehandlung des Abgases aufweist, wobei der Katalysator (1, 12) eine Mehrzahl von entlang einer Hauptdurchströmungsrichtung von einer Gaseintrittsseite (3) zu einer Gasaustrittsseite (4) durchströmbaren Strömungskanälen aufweist, wobei der Katalysator (1, 12) entlang eines Bypasses (2, 15) umströmbar ist, wobei die Vorrichtung eine Prallplatte (6, 13) aufweist, welche dem Bypass (2, 15) in Strömungsrichtung des Abgases vorgelagert ist und den Bypass (2, 15) in Strömungsrichtung betrachtet überdeckt.

## Beschreibung

### Technisches Gebiet

Die Erfindung betrifft eine Vorrichtung zur Abgasnachbehandlung einer Feuerungsanlage, insbesondere eines Kaminofens, wobei die Vorrichtung in einem abgasführenden Abschnitt der Feuerungsanlage angeordnet ist und einen Katalysator zur katalytischen Nachbehandlung des Abgases aufweist, wobei der Katalysator eine Mehrzahl von entlang einer Hauptdurchströmungsrichtung von einer Gaseintrittsseite zu einer Gasaustrittsseite durchströmbaren Strömungskanälen aufweist, wobei der Katalysator entlang eines Bypasses umströmbar ist.

### Stand der Technik

Für die gasförmigen Emissionen bei Feuerungsanlagen, wie beispielsweise Kaminöfen im Wohnbereich, werden beispielsweise Katalysatoren verwendet, die zu einer Senkung der Anteile von Kohlenwasserstoffen (HC) und Kohlenmonoxid (CO) beitragen. Solche Katalysatoren können beispielsweise in der Abgasleitung einer solchen Feuerungsanlage montiert werden.

Zusätzlich zur Reduzierung der Anteile dieser nicht erwünschten gasförmigen Bestandteile des Abgases werden elektrostatische Partikelfilter eingesetzt, die dabei helfen Staubemissionen aus dem Abgas zu filtern. Hierzu werden die im Abgas mitgeführten Partikel mittels einer Hochspannungselektrode, einer sogenannten Sprühelektrode, elektrisch aufgeladen. Im Abgasstrang wird eine Gegenelektrode ausgebildet, beispielsweise die Innenwandung der Abgasleitung, an welcher sich infolge der elektrostatischen Aufladung die Partikel ablagern. Die abgelagerten Partikel werden von dort beispielsweise in einen Auffangkasten geleitet oder in regelmäßigen Abständen, etwa durch den Schornsteinfeger, entfernt.

Nachteilig an den bekannten Abscheidemechanismen für Staubemissionen bei Feuerungsanlagen ist insbesondere, dass die Verwendung solcher elektrostatischen Partikelfilter sehr aufwändig ist, da der nötige Bauraum vorhanden sein muss, eine ausreichende Energieversorgung der Hochspannungselektrode gegeben sein muss und weiterhin eine den Einsatzbedingungen angemessene Ausgestaltung der Vorrichtung gegeben sein muss. Hierzu zählt beispielsweise eine ausreichende Temperaturfestigkeit oder eine ausreichende Abdichtung an Durchführungen durch die Wandung der Abgasleitung. Dies führt dazu, dass die Nachrüstung einer Feuerungsanlage, insbesondere eines Kaminofens, oftmals mit einem hohen technischen Aufwand verbunden ist und die Nachrüstung daher nicht wirtschaftlich ist.

### Darstellung der Erfindung, Aufgabe, Lösung, Vorteile

Daher ist es die Aufgabe der vorliegenden Erfindung eine Vorrichtung zu schaffen, welche sowohl eine katalytische Nachbehandlung des Abgases einer Feuerungsanlage erlaubt und gleichzeitig auch eine wirkungsvolle Reduzierung der Staubemissionen bewirkt. Die Vorrichtung soll dabei derart ausgestaltet sein, dass eine einfache Nachrüstbarkeit für bereits bestehende Anlagen gewährleistet ist und weiterhin eine einfache Integrierbarkeit für neu geplante Anlagen (Erstausrüstung) gegeben ist.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Abgasnachbehandlung einer Feuerungsanlage, insbesondere eines Kaminofens, wobei die Vorrichtung in einem abgasführenden Abschnitt der Feuerungsanlage angeordnet ist und einen Katalysator zur katalytischen Nachbehandlung des Abgases aufweist, wobei der Katalysator eine Mehrzahl von entlang einer Hauptdurchströmungsrichtung von einer Gaseintrittsseite zu einer Gasaustrittsseite durchströmbaren Strömungskanälen aufweist, wobei der Katalysator entlang eines Bypasses umströmbar ist, wobei die Vorrichtung eine Prallplatte aufweist, welche dem Bypass in Strömungsrichtuztrung des Abgases vorgelagert ist und den Bypass in Strömungsrichtung betrachtet überdeckt.

Ein Bypass zur Umströmung des Katalysators ist vorzusehen, um auch bei einer verblockten Matrix einen natürlichen Kaminzug zu erhalten. Die Matrix beziehungsweise die in der Matrix ausgebildeten Strömungskanäle können insbesondere durch im Abgas mitgeführte Festkörper, wie beispielsweise Ruß oder Staubpartikel, zugesetzt werden, wodurch die Durchströmung erschwert oder gänzlich verhindert wird. Dies führt insbesondere zu einem erhöhten Abgasgegendruck vor dem Katalysator. Der Bypass dient in einem solchen Fall als offener Durchströmungsquerschnitt, durch welchen das unbehandelte Abgas, auch Rohgas genannt, am Katalysator vorbeiströmen kann. Der Bypass muss hierzu einen Mindestquerschnitt von 2000mm² oder 3% der Querschnittsfläche der Abgasleitung aufweisen, um den gesetzlichen Bestimmungen zu genügen. So muss jeder als Bypass wirkende Kanal eine Mindestweite von 15mm aufweisen. Der Bypass kann praktisch an jeder Stelle des Katalysators angeordnet sein, kann aus einem einzigen den Katalysator durchstechenden Kanal oder aus mehreren Einzelkanälen gebildet sein, deren Gesamtquerschnitt den gesetzlich geforderten Mindestquerschnitt erreicht.

Die Feuerungsanlage weist gewöhnlich eine Brennraum auf, in welchem eine Verbrennung stattfindet. Dies kann beispielsweise eine mit einem Brennstoff bestückbare Brennkammer sein. Darüber hinaus weist eine Feuerungsanlage regelmäßig eine Abgasführung auf, die das Abgas aus dem Brennraum zur Umgebung, insbesondere ins Freie, abführt. Hierfür können Abgasleitungen bekannter Art, wie beispielsweise Metallrohre oder Schornsteine, verwendet werden. Die erfindungsgemäße Vorrichtung kann prinzipiell an jedem Punkt zwischen dem Ort der Verbrennung und dem Entweichen der Abgase in die Umwelt angeordnet sein.

Eine bevorzugte Ausführungsform des Bypasses ist ein zentral verlaufender Kanal durch den Katalysator hindurch, wodurch der Katalysator einen ringförmigen Querschnitt erhält. Auch ist es vorsehbar, dass der Bypass selbst einen ringförmigen Querschnitt aufweist und zwischen dem Katalysator und dem Rohr der Abgasleitung ausgebildet ist.

Eine Prallplatte ist insbesondere durch einen Festkörper gebildet, welcher in dem Abgasstrom angeordnet ist und so ein Hindernis für das strömende Abgas bildet. Durch die Prallplatte wird zumindest ein Teil des Abgasstroms umgelenkt und auf die Gaseintrittsseite des Katalysators gelenkt. Die Prallplatte ist dem Katalysator bevorzugt in Strömungsrichtung vorgelagert, wodurch erreicht wird, dass das noch unbehandelte Abgas auf die Prallplatte auftrifft. Die Prallplatte ist bevorzugt in einer Flucht mit dem Bypass ausgerichtet, so dass entlang der Abgasleitung auf den Bypass zuströmendes Abgas nicht direkt in den Bypass einströmen kann, sondern zuerst auf die Prallplatte auftrifft. Hierdurch erfährt das Abgas eine Ablenkung von der Prallplatte weg und somit um die Einströmöffnung des Bypasses herum. Somit wird verhindert, dass das unbehandelte Abgas direkt in den Bypass einströmen kann und somit an dem Katalysator vorbei.

Die Prallplatte ist in Strömungsrichtung beabstandet zur Gaseintrittsseite des Katalysators angeordnet, sodass durch ein Umströmen der Prallplatte auch eine Strömungsstrecke in den Bypass hinein gewährleistet ist. Die Prallplatte kann je nach Auslegung der Gesamtvorrichtung einen identischen Querschnitt im Vergleich zum Bypass aufweisen oder aber auch einen größeren oder einen kleineren Querschnitt. Je nach Wahl des Querschnitts wird somit das Einströmen in den Bypass erleichtert oder erschwert. Besonders bevorzugt ist das Verhältnis des Querschnitts der Öffnung des Bypasses im Vergleich zum Querschnitt der Prallplatte kleiner als 0,9. Die Prallplatte weist somit bevorzugt einen größeren Querschnitt als die Öffnung des Bypasses auf.

Je geringer der durch den Katalysator verursachte Gegendruck für das strömende Abgas ist, umso mehr Abgas wird durch die Strömungskanäle des Katalysators strömen. Je höher der Abgasgegendruck ist, umso größer wird der durch den Bypass strömende Anteil des Abgases sein. Idealerweise strömt ein möglichst großer Anteil des Abgases durch den Katalysator und ein möglichst geringer Anteil durch den Bypass.

Besonders vorteilhaft ist es, wenn der Katalysator durch ein keramisches Substrat oder durch einen metallischen Wabenkörper gebildet ist.

Katalysatoren zur Abgasnachbehandlung sind in vielfältigen Bauformen bekannt. Die am stärksten verbreiteten Varianten sind entweder durch keramische Substrate gebildet oder durch einen metallischen Wabenkörper. Metallische Wabenkörper sind bevorzugt aus einer Mehrzahl von metallischen Folien gebildet, die aufeinandergestapelt sind und zu einem Wabenkörper aufgewickelt sind. Hierbei kommen bevorzugt insbesondere glatte Folien und zumindest teilweise strukturierte Folien zum Einsatz, zwischen welchen die späteren Strömungskanäle ausgebildet werden. Wie auch in anderen bekannten Katalysatoren kann auch ein Katalysator auf Basis eines metallischen Wabenkörpers für die erfindungsgemäße Benutzung durch eine Vielzahl unterschiedlicher Faktoren auf den jeweiligen Einsatzzweck angepasst werden. Zu den anpassbaren Faktoren zählen insbesondere die Querschnitte der Strömungskanäle, die Dichte der Strömungskanäle pro Fläche, die Form der Strukturierung der zumindest teilweise strukturierten Folien, die spezifischen Ausgestaltung der Strömungskanäle und andere Faktoren.

Das Substrat beziehungsweise die Matrix sind mit einer edelmetallhaltigen Oxidbeschichtung überzogen, welche die katalytisch aktive Schicht darstellt und an welcher die chemische Reaktion des Abgases stattfindet. Die Prallplatte und/oder die Innenwandungen der Abgasleitung können ebenfalls mit einer solchen Beschichtung beaufschlagt sein. Die Prallplatte kann bevorzugt nur auf der Gaseintrittsseite und/oder der Gasaustrittsseite beschichtet sein. Die Prallplatte kann bevorzugt eine geschlossene Oberfläche aufweise oder auch teilweise oder vollständig eine poröse Oberfläche.

Eine besonders vorteilhafte Ausgestaltung des Katalysators weist eine Kanaldichte von 10 bis 600 cpsi, Kanälen pro Quadratinch (cells per square inch), auf. Die Wandstärken der Strömungskanäle ist besonders bevorzugt zwischen 20 µm und 250 µm.

Durch den Einsatz eines Katalysators im Abgasstrang einer erfindungsgemäßen Vorrichtung können insbesondere die gasförmigen Emissionen, wie insbesondere Kohlenstoffmonoxid und Kohlenwasserstoff, deutlich gesenkt werden.

Auch ist es vorteilhaft, wenn der Katalysator ringförmig ist und einen zentralen Bypasskanal aufweist.

Ein bevorzugtes Ausführungsbeispiel ist dadurch gekennzeichnet, dass der Katalysator in einer abgasführenden Rohrleitung angeordnet ist, wobei zwischen dem Katalysator und der Rohrleitung ein ringförmiger Bypasskanal ausgebildet ist.

Auch ist es zu bevorzugen, wenn die Prallplatte einen dem Querschnitt des Bypasskanals entsprechenden Querschnitt aufweist. Insbesondere kann der Querschnitt die gleiche Form aufweisen wie der Bypasskanal. Bevorzugt ist die Querschnittsfläche der Prallplatte höher als die Querschnittsfläche der Öffnung des Bypasses. Dennoch kann die grundsätzliche Form beziehungsweise die Projektion der Außenkontur der Prallplatte und der Öffnung des Bypasses gleich.

Darüber hinaus ist es vorteilhaft, wenn die Prallplatte mittels einer Abstützvorrichtung gegenüber dem Katalysator und/oder gegenüber dem abgasführenden Abschnitt abgestützt ist.

Eine Abstützvorrichtung kann beispielsweise durch einen Arm gebildet sein, welcher von einer Struktur der Matrix des Katalysators oder einer die Matrix begrenzenden Wandung abragt. Alternativ kann die Prallplatte auch an der abgasführenden Rohrleitung, in welcher der Katalysator eingesetzt ist, angebunden sein.

In einer vorteilhaften Ausgestaltung kann die Prallplatte, insbesondere zur Reinigung, ausgebaut werden. Aufgrund ihrer vorgelagerten Position findet eine starke Anströmung mit dem unbehandelten Abgas statt, so dass an der Prallplatte mit einer erhöhten Ablagerung von im Abgas mitgeführten Bestandteilen zu rechnen ist. Eine regelmäßige Reinigung kann somit notwendig sein, weswegen die Ausbaubarkeit vorteilhaft ist. Der Abstand der Prallplatte zum Katalysator ist bevorzugt abhängig von den tatsächlichen Einsatzbedingungen einstellbar, etwa indem die Länge der Abstützvorrichtung variiert wird. Bevorzugt ist die Prallplatte mindestens 5mm und maximal 50mm von der Gaseintrittsseite des Katalysators entfernt angeordnet. Ein bevorzugter Abstand beträgt 15mm.

Weiterhin ist es vorteilhaft, wenn die Vorrichtung als Ganzes oder zumindest Teile, wie insbesondere die Prallplatte und/oder der Katalysator mittels eines Aktuators bewegbar ist.

Ein Aktuator kann bevorzugt eine Spule sein, welche durch das Anlegen einer elektrischen Spannung eine Schwingbewegung erzeugt. Dadurch kann die Vorrichtung von daran abgelagerten Partikeln befreit werden, die sonst die Strömungskanäle zusetzen oder die katalytisch aktive Oberfläche besetzen können. Alternativ kann in einer vorteilhaften Ausgestaltung eine Vorrichtung vorgesehen werden, die einen Impuls auf die Vorrichtung ausübt, beispielsweise ein Klopfen, wodurch Ablagerungen gelöst werden. Eine solche Klopfvorrichtung kann manuell von einem Anwender bedient werden oder durch einen Aktuator, wie beispielsweise einen Elektromotor.

Die gelösten Ablagerungen fallen bevorzugt in den Brennraum zurück, wo sie erneut verbrannt werden, oder in eine geeignete Auffangvorrichtung. Insbesondere bei einem manuellen Reinigen der Vorrichtung, kann in die Abgasleitung ebenfalls manuell eine Auffangvorrichtung eingebracht werden, welche nach Beendigung des Reinigungsvorgangs wieder entfernt wird.

Auch ist es zweckmäßig, wenn die Prallplatte als ebene Scheibe ausgeführt ist oder eine dreidimensional ausgeformte Oberfläche aufweist. Insbesondere die der Brennkammer zugewandte Fläche der Prallplatte kann dreidimensional ausgebildet sein, so dass das die Prallplatte anströmende Abgas möglichst direkt abgelenkt beziehungsweise umgelenkt wird und in die Strömungskanäle des Katalysators gelenkt wird. Eine bevorzugte Ausführungsform ist durch eine halbkugelförmige Prallplatte gekennzeichnet, oder durch eine konusförmige Prallplatte, wobei der Öffnungswinkel des Konus zwischen 45° und 180° beträgt.

Besonders bevorzugt weist die Vorrichtung eine Anzeigevorrichtung auf, die eine Rückmeldung über den Beladungszustand des Katalysators und/oder der Auffangvorrichtung wiedergibt. Dies kann beispielsweis über ein optisches oder ein akustisches Signal erfolgen. Auf diese Weise kann eine Reinigung oder ein Austausch der Vorrichtung oder Teilkomponenten der Vorrichtung erfolgen bevor es zu einer vollständigen Verblockung des Katalysators kommt.

Die Vorrichtung kann durch Anpassung der Dimensionierung oder gegebenenfalls unter Zuhilfenahme von Umlenkblechen und Fixierelementen in allen Abgasleitungen von Feuerungsanlagen verwendet werden. Durch die Wahl geeigneter Adapter, wie beispielsweise Diffusoren, kann die Vorrichtung auch an unterschiedliche Rohrgeometrien der Abgasleitung angepasst werden.

Bevorzugt ist die Vorrichtung derart in der Abgasleitung angeordnet, dass die dort im Betrieb vorherrschenden Temperaturen ausreichen, um die notwendige Light-Off Temperatur des Katalysators zu erreichen, ab der die katalytische Umsetzung an der edelmetallhaltigen Oxidschicht stattfinden kann. Darüber hinaus ist es vorteilhaft, wenn die Vorrichtung in einem Bereich der Abgasleitung angeordnet ist, in dem eine ausreichend hohe Temperatur herrscht, dass ein Abbrand der abgelagerten Rußpartikel stattfinden kann. Dies wirkt eine Verblockung des Katalysators entgegen.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht durch eine erfindungsgemäße Vorrichtung mit einem ringförmigen Katalysator und einer Prallplatte, und
- Fig. 2: eine Schnittansicht durch eine Abgasleitung mit einem darin angeordneten Katalysator und einer in Strömungsrichtung davor liegenden Prallplatte.

### Bevorzugte Ausführung der Erfindung

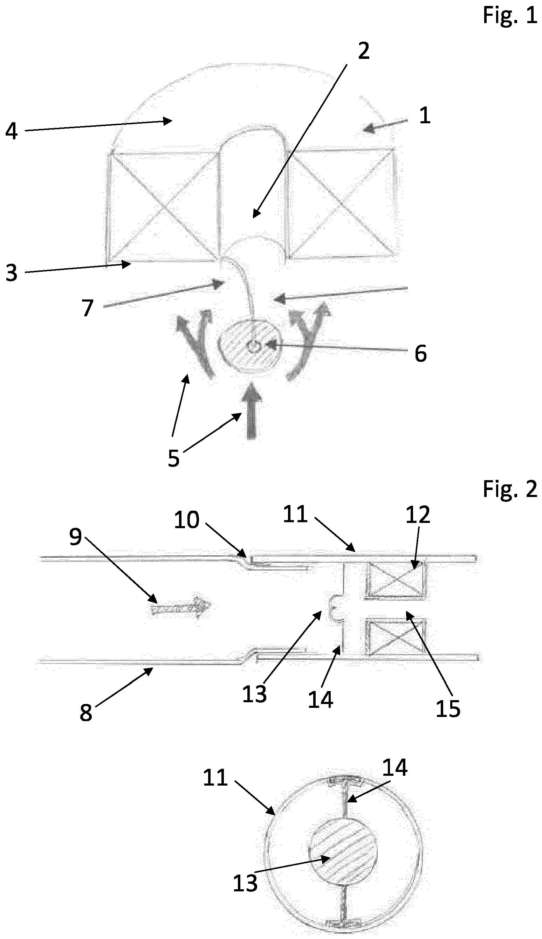

Die Figur 1 zeigt einen Katalysator 1, der beispielsweise als metallsicher Wabenkörper ausgeführt ist, der Katalysator 1 ist ein Ringkatalysator, welcher einen zentralen Bypasskanal 2 aufweist. Der Wabenkörper des Katalysators 1 weist eine Mehrzahl von Strömungskanälen auf, die sich von der Gaseintrittsseite 3 hin zur Gasaustrittsseite 4 des Katalysators 1 erstrecken.

Mit den Pfeilen 5 ist die Strömungsrichtung des Abgases gekennzeichnet. Nicht dargestellt ist das die Abgasleitung bildende Rohr, in welchen der Katalysator 1 eingesetzt ist. Der in Figur 1 gezeigte Katalysator 1 ist bevorzugt innerhalb der nicht gezeigten Abgasleitung derart angeordnet, dass zwischen der Außenfläche des Katalysators 1 und der Innenwandung der Abgasleitung kein Abgas an Katalysator 1 vorbeiströmen kann.

Die Abgasströmung kann folglich nur durch die Strömungskanäle des Katalysators 1 oder durch den Bypasskanal 2 strömen.

In Strömungsrichtung betrachtet ist dem Katalysator 1 eine Prallplatte 6 vorgelagert, welche über eine Abstützvorrichtung 7 mit dem Wabenkörper des Katalysators verbunden ist. Im Ausführungsbeispiel der Figur 1 ist die Abstützvorrichtung 7 durch einen einzelnen Arm gebildet, welcher an der dem Bypasskanal 2 zugewandten Wandung des Katalysators 1 angebunden ist. Die Prallplatte 6 ist in einer Verlängerung des Bypasskanals 2 angeordnet und überdeckt die lichte Öffnung des Bypasskanals an der Gaseintrittsseite 3 des Katalysators 1.

Die Figur 2 zeigt eine Schnittansicht durch eine Abgasleitung 8 welche entlang des Pfeils 9 mit einem Abgas einer nicht gezeigten Feuerungsanlage durchströmt wird. Die Abgasleitung 8 ist als Rohr ausgebildet und weist in diesem speziellen Ausführungsbeispiel einen verjüngten Endbereich 10 auf. Auf diesen verjüngten Bereich 10 ist ein ebenfalls rohrförmiges Gehäuse 11 aufgesteckt.

In dem rohrförmigen Gehäuse 11 ist die Vorrichtung zur Abgasnachbehandlung angeordnet, wie sie etwa in Figur 1 in einer leicht abweichenden Ausführung dargestellt ist. Im Gehäuse 11 ist ein ringförmiger Katalysator 12 und eine in Strömungsrichtung vorgelagerte Prallplatte 13 angeordnet. Der Katalysator 12 weist einen zentralen Bypasskanal 15 auf. Im Unterschied zur Figur 1 ist die Prallplatte 13 mittels Abstützelementen 14 gegenüber dem Gehäuse 11 abgestützt.

Im unteren Teil der Figur 2 ist eine Aufsicht auf die Prallplatte 13 entlang der Mittelachse der Abgasleitung 8 beziehungsweise des Gehäuses 11 gezeigt. Die Prallplatte 13 ist zentral in der Abgasleitung 8 beziehungsweise im Gehäuse 11 angeordnet und überdeckt den Bypasskanal 15, welcher in der Ansicht der Figur 2 hinter der Zeichnungsebene angeordnet ist.

Die unterschiedlichen Merkmale der einzelnen Ausführungsbeispiele können auch untereinander kombiniert werden.

Die Ausführungsbeispiele der Figuren 1 und 2 weisen insbesondere keinen beschränkenden Charakter auf und dienen der Verdeutlichung des Erfindungsgedankens.

## Patentansprüche

1. Vorrichtung zur Abgasnachbehandlung einer Feuerungsanlage, insbesondere eines Kaminofens, wobei die Vorrichtung in einem abgasführenden Abschnitt (8) der Feuerungsanlage angeordnet ist und einen Katalysator (1, 12) zur katalytischen Nachbehandlung des Abgases aufweist, wobei der Katalysator (1, 12) eine Mehrzahl von entlang einer Hauptdurchströmungsrichtung von einer Gaseintrittsseite (3) zu einer Gasaustrittsseite (4) durchströmbaren Strömungskanälen aufweist, wobei der Katalysator (1, 12) entlang eines Bypasses (2, 15) umströmbar ist, **dadurch gekennzeichnet, dass** die Vorrichtung eine Prallplatte (6, 13) aufweist, welche dem Bypass (2, 15) in Strömungsrichtung des Abgases vorgelagert ist und den Bypass (2, 15) in Strömungsrichtung betrachtet überdeckt.

2. Vorrichtung nach Anspruch 1, **dadurch gekennzeichnet, dass** der Katalysator (1, 12) durch ein keramisches Substrat oder durch einen metallischen Wabenkörper gebildet ist.

3. Vorrichtung nach einem der vorhergehenden Ansprüche, **dadurch gekennzeichne**t, **dass** der Katalysator (1, 12) ringförmig ist und einen zentralen Bypasskanal (2, 15) aufweist.

4. Vorrichtung nach einem der vorhergehenden Ansprüche, **dadurch gekennzeichnet, dass** der Katalysator in einer abgasführenden Rohrleitung angeordnet ist, wobei zwischen dem Katalysator und der Rohrleitung ein ringförmiger Bypasskanal ausgebildet ist.

5. Vorrichtung nach einem der vorhergehenden Ansprüche, **dadurch gekennzeichnet, dass** die Prallplatte (6, 13) einen dem Querschnitt des Bypasskanals (2, 15) entsprechenden Querschnitt aufweist.

6. Vorrichtung nach einem der vorhergehenden Ansprüche, **dadurch gekennzeichnet, dass** die Prallplatte (6, 13) mittels einer Abstützvorrichtung (7, 14) gegenüber dem Katalysator (1) und/oder gegenüber dem abgasführenden Abschnitt (11) abgestützt ist.

7. Vorrichtung nach einem der vorhergehenden Ansprüche, **dadurch gekennzeichnet, dass** die Vorrichtung als Ganzes oder zumindest Teile, wie insbesondere die Prallplatte (6, 13) und/oder der Katalysator (1, 12) mittels eines Aktuators bewegbar ist.

8. Vorrichtung nach einem der vorhergehenden Ansprüche, **dadurch gekennzeichnet, dass** die Prallplatte (6, 13) als ebene Scheibe ausgeführt ist oder eine dreidimensional ausgeformte Oberfläche aufweist.
